# EUROPEAN PATENT APPLICATION

(11) **EP 4 617 866 A1**
(43) Date of publication of application: **17.09.2025**
(21) Application number: 25163270.9
(22) Date of filing: 12.03.2025
(51) Int. Cl.: G06F 9/445, G06F 11/34, G06N 20/00

(54) **SYSTEM AND METHOD TO TRACK PERFORMANCE OF AN ARTIFICIAL INTELLIGENCE (AI) APPLICATION DURING DEVELOPMENT AND PRODUCTION LIFECYCLE**

(30) Priority: 14.03.2024 IN 202421018723
(71) Applicant: Tata Consultancy Services Limited, Mumbai, Maharashtra 400 021 (IN)
(72) Inventor: JAIN, Anubhav, 110001 New Delhi, Delhi (IN); PRAHLADKA, Udit Rajesh, 400096 Mumbai, Maharashtra (IN); KALELE, Amit, 411057 Pune, Maharashtra (IN); SUBBIAH, Ravindran, 695581 Trivandrum, Kerala (IN)
(74) Representative: Goddar, Heinz J.

(57) **Abstract**

This disclosure relates generally to system and method to track performance of an AI application during development and production lifecycle. Libraries and tools that are used to develop an enterprise AI application are rapidly expanding across vendors and open-source community. These libraries are coming up with new features and breaking changes with new versions making it difficult to application developer and enterprise runtime executor. The method of the present disclosure receives an enterprise artificial intelligence (AI) application and corresponding software environment as input generate a logger plug-in using one or more fine-tuned large language models (LLMs) based on the plurality of instructions provided by the one or more instructors. Additionally, the logger plug-in is utilized to validate correctness of errors and then the logger plug-in is executed with the enterprise AI application to log and track performance of the enterprise AI application.

## Description

### CROSS-REFERENCE TO RELATED APPLICATIONS AND PRIORITY

The present application claims priority to Indian application no. 202421018723, filed on March 14, 2024.

### TECHNICAL FIELD

The disclosure herein generally relates to artificial intelligence (AI), and, more particularly, to system and method to track performance of an AI application during development and production lifecycle.

### BACKGROUND

Logging is a process of tracking and recording events that occur in artificial intelligence (AI) enterprise application for performance measure. Such events help to inspect processes, fix issues, development, and maintenance of software systems and thereof. However, such large amount of logged events analysis is a huge challenge. Modern software systems generate a huge volume of logs, making it impractical to inspect logs with traditional log analysis tools, based on manual query-level matching or rule-based policies.

Traditional log management tools creates a centralized repository for log data. With machine learning, the more logs that are gathered in a log analysis tool, the more information can be used to create algorithms. These log intelligence algorithms can be used to detect patterns and anomalies proactively, keeping the time spent sifting through logs to a minimum.

However, such existing tools lack to log various AI application parameters required for performance tracking. Such AI model related parameters are required for tracking and analysis by business owners, data scientists, developer, devops professionals to understand model accuracy, system latency, inference cost, decision-making flow of agents and thereof. This helps enterprise to optimize experimentation and deployment of enterprise AI application. However, with rapid increase of libraries and tools enterprise AI application is expanding across vendors and open-source community. These libraries are coming up with new features and breaking changes with new versions making it difficult For developers, data scientists to analyze performance of an enterprise application.

### SUMMARY

Embodiments of the present disclosure present technological improvements as solutions to one or more of the above-mentioned technical problems recognized by the inventors in conventional systems. For example, in one embodiment, a system to track performance of an artificial intelligence (AI) application during development and production lifecycle is provided. The system includes receiving an enterprise artificial intelligence (AI) application and corresponding software environment from a user. Further, the enterprise AI application is scanned to identify corresponding application programming interface (API) from an API dictionary comprising at least one of an AI library and a logger library. Each AI library includes one or more APIs, and each logger library includes one or more logger APIs. Further, a logging configuration file for the API is generated based on a plurality of logging configurations comprising one or more parameters, one or more metrices, an execution flow and a logger. Then the one or more logger APIs are obtained from the logger library by mapping the plurality of logging configuration constraints with the API.

Further, from the software environment an API source code is retrieved for the API and using one or more instructors a plurality of instructions for the API source code is constructed. Further, a logger plug-in is generated using one or more fine-tuned large language models (LLMs) based on the plurality of instructions provided by the one or more instructors. Then, the logger plug-in is validated utilizing a configuration validator and a syntax validator for error correctness and providing a feedback to the one or more instructors on occurrence of at least one error. Lastly, the logger plug-in is executed with the enterprise AI application to log and track performance of the enterprise AI application.

In another aspect, a method to track performance of an artificial intelligence (AI) application during development and production lifecycle is provided. The method includes receiving an enterprise artificial intelligence (AI) application and corresponding software environment from a user. Further, the enterprise AI application is scanned to identify corresponding application programming interface (API) from an API dictionary comprising at least one of an AI library and a logger library. Each AI library includes one or more APIs, and each logger library includes one or more logger APIs. Further, a logging configuration file for the API is generated based on a plurality of logging configurations comprising one or more parameters, one or more metrices, an execution flow and a logger. Then the one or more logger APIs are obtained from the logger library by mapping the plurality of logging configuration constraints with the API.

Further, from the software environment an API source code is retrieved for the API and using one or more instructors a plurality of instructions for the API source code is constructed. Further, a logger plug-in is generated using one or more fine-tuned large language models (LLMs) based on the plurality of instructions provided by the one or more instructors. Then, the logger plug-in is validated utilizing a configuration validator and a syntax validator for error correctness and providing a feedback to the one or more instructors on occurrence of at least one error. Lastly, the logger plug-in is executed with the enterprise AI application to log and track performance of the enterprise AI application.

In yet another aspect, a non-transitory computer readable medium to track performance of an artificial intelligence (AI) application during development and production lifecycle is provided. The computer readable program, when executed on a system comprising one or more hardware processors causes the computing device to receive an enterprise artificial intelligence (AI) application and corresponding software environment from a user. Further, the enterprise AI application is scanned to identify corresponding application programming interface (API) from an API dictionary comprising at least one of an AI library and a logger library. Each AI library includes one or more APIs, and each logger library includes one or more logger APIs. Further, a logging configuration file for the API is generated based on a plurality of logging configurations comprising one or more parameters, one or more metrices, an execution flow and a logger. Then the one or more logger APIs are obtained from the logger library by mapping the plurality of logging configuration constraints with the API.

Further, from the software environment an API source code is retrieved for the API and using one or more instructors a plurality of instructions for the API source code is constructed. Further, a logger plug-in is generated using one or more fine-tuned large language models (LLMs) based on the plurality of instructions provided by the one or more instructors. Then, the logger plug-in is validated utilizing a configuration validator and a syntax validator for error correctness and providing a feedback to the one or more instructors on occurrence of at least one error. Lastly, the logger plug-in is executed with the enterprise AI application to log and track performance of the enterprise AI application.

It is to be understood that both the foregoing general description and the following detailed description are exemplary and explanatory only and are not restrictive of the invention, as claimed.

### BRIEF DESCRIPTION OF THE DRAWINGS

The accompanying drawings, which are incorporated in and constitute a part of this disclosure, illustrate exemplary embodiments and, together with the description, serve to explain the disclosed principles:
FIG.1 is a functional block diagram of a system to track performance of an artificial intelligence (AI) application during development and production lifecycle, in accordance with some embodiments of the present disclosure.
FIG.2 illustrates an architectural overview of the system of FIG.1, in accordance with some embodiments of the present disclosure.
FIG.3A and FIG.3B (collectively referred as FIG.3) is a flow diagram illustrating a method to track performance of an enterprise artificial intelligence (AI) application, using the system of FIG.1, in accordance with some embodiments of the present disclosure.
FIG.4 illustrates a working example to track performance of the AI application using the system of FIG.1, in accordance with some embodiments of the present disclosure.

It should be appreciated by those skilled in the art that any block diagrams herein represent conceptual views of illustrative systems and devices embodying the principles of the present subject matter. Similarly, it will be appreciated that any flow charts, flow diagrams, and the like represent various processes which may be substantially represented in computer readable medium and so executed by a computer or processor, whether or not such computer or processor is explicitly shown.

### DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments.

Existing tools used to log application parameters lack in logging various artificial intelligence (AI) model parameters critical for performance tracking. Libraries and tools that are used to develop the enterprise AI application are rapidly expanding across vendors and open-source community. These libraries are coming up with new features and breaking changes with new versions making it difficult for developing or executing the AI application. For example, 1. Developers to continue support developing logging and tracking modules, 2. Data scientist to do extensive manual instrumentation of an AI application enable logging and tracking, 3. To track advanced features like AI enabled agents that decides next action and route queries to specific tool that may further goes into calling another agent or model. Tracking such decision-making by execution flow graph is important for data scientist to analyze performance of an enterprise application.

Existing method manually instruments the enterprise AI application to log required parameters, metrices and the like for each AI library. With different AI library and changing versions, continous development and versioning of logging code is required.

Embodiments herein provide a method and system to track performance of an artificial intelligence (AI) application during development and production lifecycle. The system may be alternatively referred as enterprise application performance tracking system. The system enables providing tracking performance of enterprise AI application. The method of the present disclosure enables to generate code plug-in that act as a runtime patch to complement an enterprise AI application to enable logging and tracking of metrices, parameters and execution flow. The method uses system intelligence to scan user enterprise AI application and device methodology to prepare data that leads to generate desired code plug-in by inferring with fine-tuned set of LLMs. Theis reduces need of manual code instrumentation, plug-in development for logging and tracking of an AI application. The method of the present disclosure mitigates manual instrumentation of an enterprise AI application to log parameters, metrices for individual AI library and for each version.

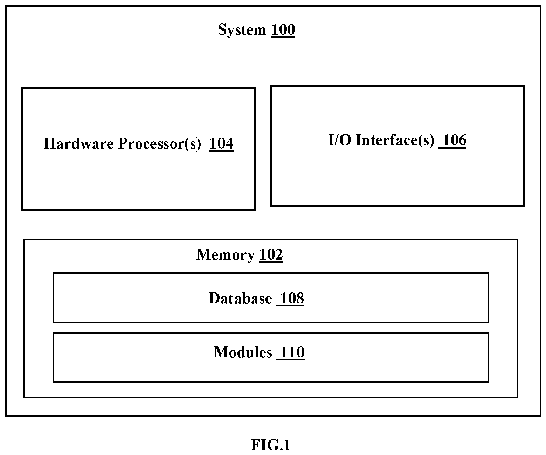

Referring now to the drawings, and more particularly to FIG. 1 through FIG.4, where similar reference characters denote corresponding features consistently throughout the figures, there are shown preferred embodiments, and these embodiments are described in the context of the following exemplary system and/or method.

FIG.1 is a functional block diagram of a system to track performance of an artificial intelligence (AI) application during development and production lifecycle, in accordance with some embodiments of the present disclosure. In an embodiment, the system 100 includes a processor(s) 104, communication interface device(s), alternatively referred as input/output (I/O) interface(s) 106, and one or more data storage devices or a memory 102 operatively coupled to the processor(s) 104. The system 100 with one or more hardware processors is configured to execute functions of one or more functional blocks of the system 100.

Referring to the components of system 100, in an embodiment, the processor(s) 104, can be one or more hardware processors 104. In an embodiment, the one or more hardware processors 104 can be implemented as one or more microprocessors, microcomputers, microcontrollers, digital signal processors, central processing units, state machines, logic circuitries, and/or any devices that manipulate signals based on operational instructions. Among other capabilities, the one or more hardware processors 104 are configured to fetch and execute computer-readable instructions stored in the memory 102. In an embodiment, the system 100 can be implemented in a variety of computing systems including laptop computers, notebooks, hand-held devices such as mobile phones, workstations, mainframe computers, servers, and the like.

The I/O interface(s) 106 can include a variety of software and hardware interfaces, for example, a user interface, a tracking dashboard to display performance of the enterprise application, and the like and can facilitate multiple communications within a wide variety of networks N/W and protocol types, including wired networks, for example, LAN, cable, etc., and wireless networks, such as WLAN, cellular and the like. In an embodiment, the I/O interface (s) 106 can include one or more ports for connecting to a number of external devices or to another server or devices.

The memory 102 may include any computer-readable medium known in the art including, for example, volatile memory, such as static random access memory (SRAM) and dynamic random access memory (DRAM), and/or non-volatile memory, such as read only memory (ROM), erasable programmable ROM, flash memories, hard disks, optical disks, and magnetic tapes.

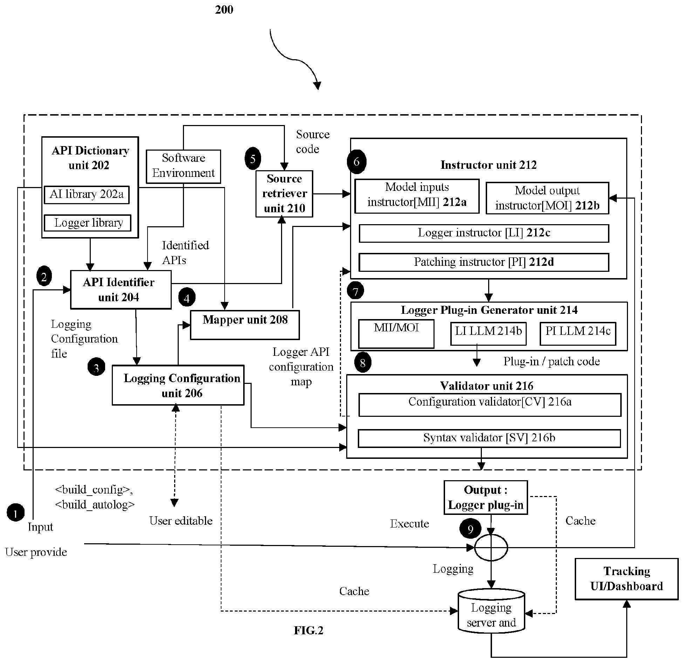

In an embodiment, the memory 102 includes a plurality of modules 110 such as an application programming interface (API) dictionary unit 202, an application programming interface (API) identifier unit 204, and so on as depicted in FIG.2. The plurality of modules 110 include programs or coded instructions that supplement applications or functions performed by the system 100 for executing different steps involved in the process of tracking performance of an enterprise artificial intelligence (AI) application, being performed by the system 100. The plurality of modules 110, amongst other things, can include routines, programs, objects, components, and data structures, which performs particular tasks or implement particular abstract data types. The plurality of modules 110 may also be used as, signal processor(s), node machine(s), logic circuitries, and/or any other device or component that manipulates signals based on operational instructions. Further, the plurality of modules 110 can be used by hardware, by computer-readable instruction]s executed by the one or more hardware processors 104, or by a combination thereof. The plurality of modules 110 can include various sub-modules (not shown).

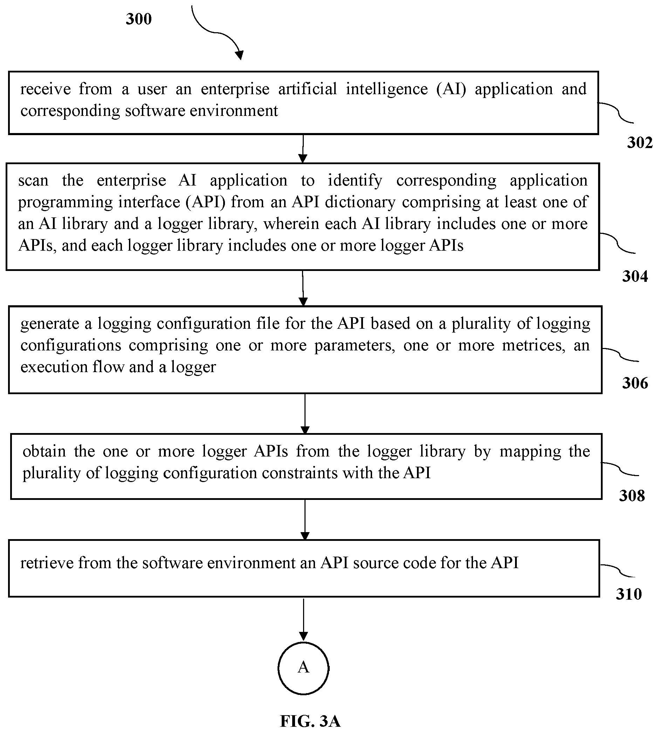

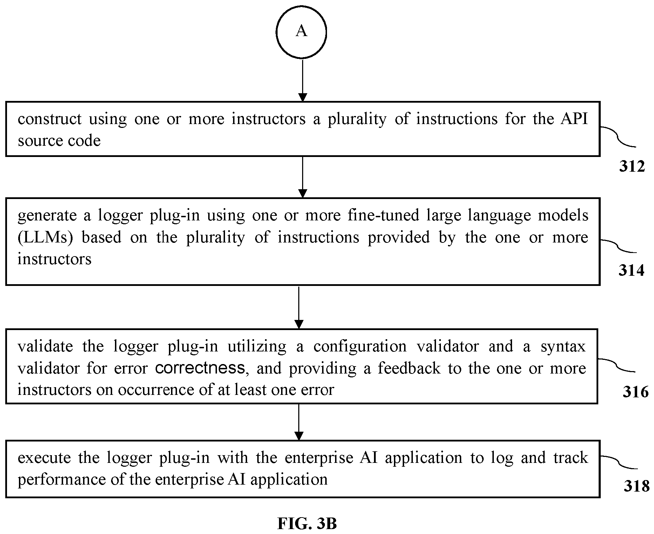

Further, the memory 102 may comprise information pertaining to input(s)/output(s) of each step performed by the processor(s) 104 of the system 100 and methods of the present disclosure. Further, the memory 102 includes a database 108. The database 108 stores logger plug-in and logger API in a logger server storage unit. The database (or repository) 108 may include a plurality of abstracted piece of code for refinement and data that is processed, received, or generated as a result of the execution of the plurality of modules in the module(s) 110. Although the database 108 is shown internal to the system 100, it will be noted that, in alternate embodiments, the database 108 can also be implemented external to the system 100, and communicatively coupled to the system 100. The data contained within such external database may be periodically updated. For example, new data may be added into the database (not shown in FIG.1) and/or existing data may be modified and/or non-useful data may be deleted from the database. In one example, the data may be stored in an external system, such as a Lightweight Directory Access Protocol (LDAP) directory and a Relational Database Management System (RDBMS). Functions of the components of the system 100 are now explained with reference to FIG.2 and steps in flow diagrams in FIG.3.

FIG.2 illustrates an architectural overview of the system of FIG.1, in accordance with some embodiments of the present disclosure. The FIG.2 depicts a API dictionary unit 202, an API identifier unit 204, a logging configuration unit 206, a mapper unit 208, a source retriever unit 210, an instructor unit 212, a logger plug-in generator unit 214, and a validator unit 216.

The API dictionary unit 202 comprises an AI library 202a and a logger library 202b.

The API identifier unit 204 receives an enterprise artificial intelligence (AI) application from a user. The user may not be limited to an AI application developer or an AI application runtime executor. For example, the user may be a data scientist or a developer who developed enterprise API application. The API identifier unit 204 scans the enterprise AI application to identify corresponding application programming interface (API) from the API dictionary 202. Further, an API source code is retrieved from a software environment for the API.

The instructor unit 212 comprises a model input instructor 212a, a model output instructor 212b, a logger instructor 212c, and a patching instructor 212d. The instructor unit 212 constructs a plurality of instructions for the API source code.

The logger plug-in generator unit 214 comprises one or more fine-tuned large language models (LLMs) corresponding to at least one of the model input instructor, the model output instructor, the logger instructor 212c, and the patching instructor. Here, the logger plug-in generator unit 214 generates a logger-plugin based on the plurality of instructions.

The validator unit 216 comprises a configuration validator 216a, and a syntax validator 216b which validates the logger plug-in and provides a feedback for error occurrence.

FIG.3A and FIG.3B (collectively referred as FIG.3) is a flow diagram illustrating a method to track performance of an enterprise artificial intelligence (AI) application, using the system of FIG. 1, in accordance with some embodiments of the present disclosure.

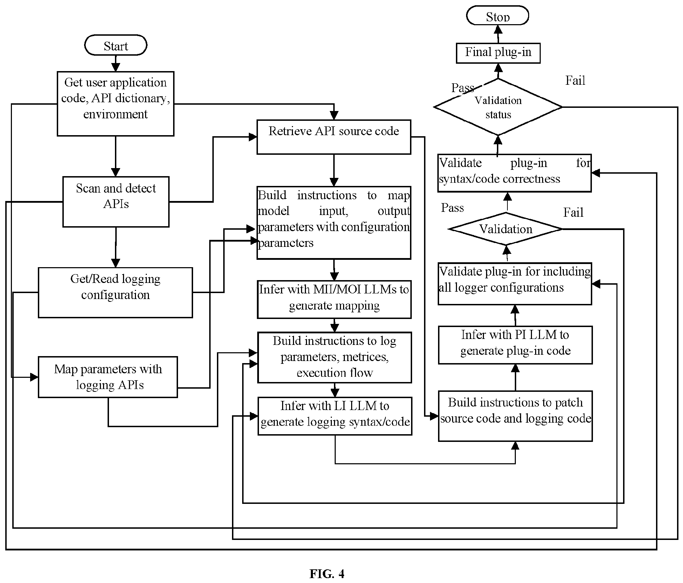

In an embodiment, the system 100 comprises one or more data storage devices or the memory 102 operatively coupled to the processor(s) 104 and is configured to store instructions for execution of steps of the method 300 by the processor(s) or one or more hardware processors 104. The steps of the method 300 of the present disclosure will now be explained with reference to the components or blocks of the system 100 as depicted in FIG. 1 and FIG.2, the steps of flow diagram as depicted in FIG.3 and a use case example of enterprise AI application in FIG.4. Although process steps, method steps, techniques or the like may be described in a sequential order, such processes, methods, and techniques may be configured to work in alternate orders. In other words, any sequence or order of steps that may be described does not necessarily indicate a requirement that the steps to be performed in that order. The steps of processes described herein may be performed in any order practical. Further, some steps may be performed simultaneously.

Referring to FIG.3 and the steps of the method 300, at step 302 of the method 300, the one or more hardware processors 104 receive an enterprise artificial intelligence (AI) application and corresponding software environment from a user.

Considering an example (Table 1 and FIG.4), where the user may feed the enterprise AI application into the system 100. The user being the data scientist or the developer but not limited to enterprise AI application developer or the user who executes or use the enterprise AI application. FIG.4 illustrated is utilized as an working example of enterprise AI application in further embodiments for explanation.

The enterprise AI application may be developed in python that may leverage one or more AI libraries (for example OpenAI, Bedrock, Transformers, Keras, Sklearn and thereof.). These AI libraries support different models and corresponding APIs that have different input and output body structure. Logging of various parameters and metrics directly or by deriving from these structures is needed so that they can be tracked to analyze performance during experimentation and deployment stages.

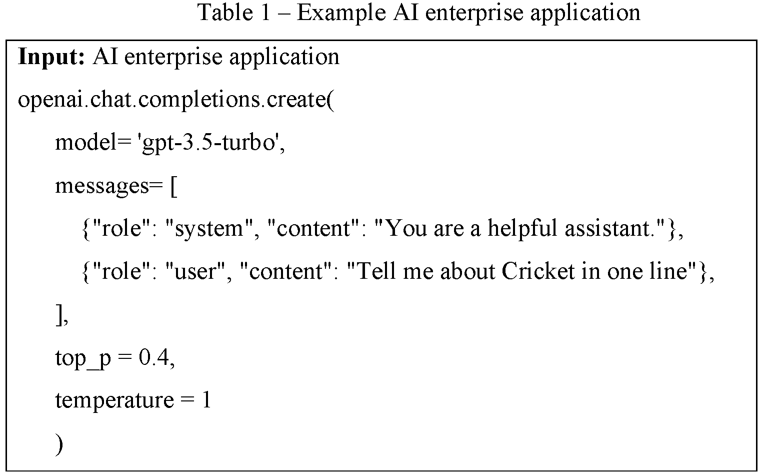

At step 304 of the method 300, the one or more hardware processors 204 scans the enterprise AI application to identify corresponding application programming interface (API) from the API dictionary unit 202 comprising at least one of an AI library and a logger library. Each AI library includes one or more APIs, and each logger library includes one or more logger APIs.

For the above example as depicted in Table 1, the API identifier unit 204 obtains the enterprise artificial intelligence (AI) application from the user. Further, the API identifier unit 204 scans the enterprise AI application to identify corresponding application programming interface (API) from an API dictionary is configured into the API dictionary unit 204 as depicted in Table 2. The API dictionary unit 204 comprises the AI library 202a and the logger library 202b which are used to scan and identify corresponding application programming interface (API).

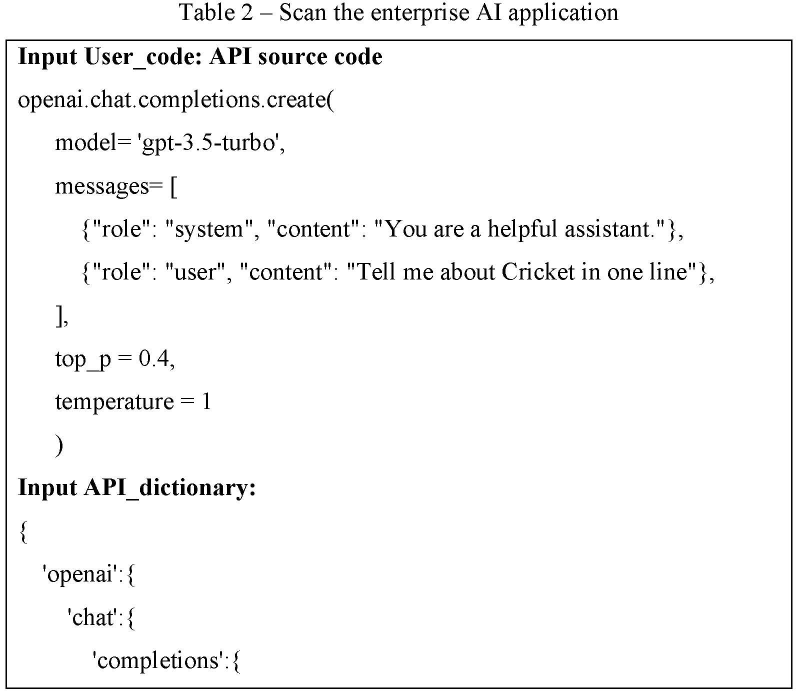

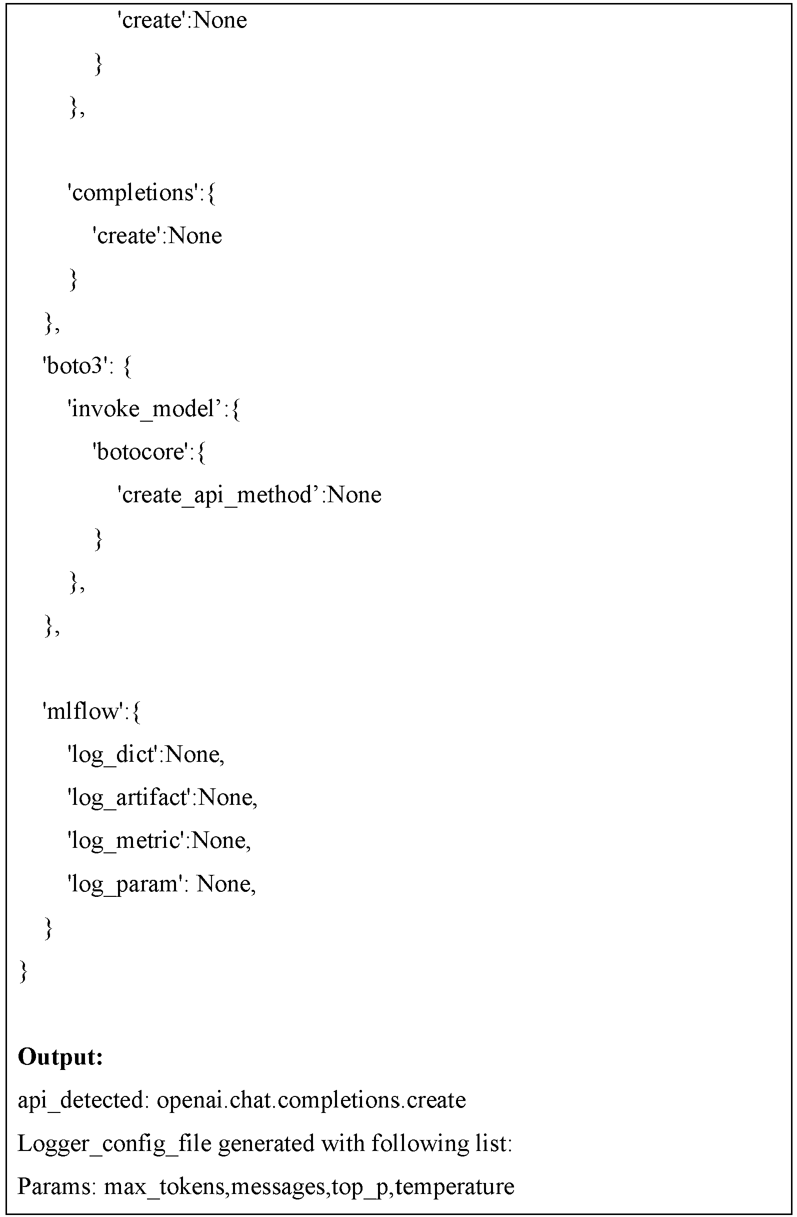

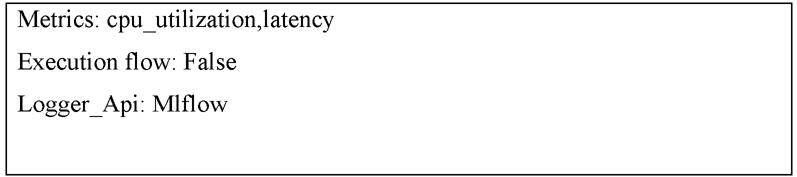

The AI library 202a includes one or more APIs obtained from any open source environment and are available in public domain and can be installed on compatible software environment.

The logger library 202b includes one or more logger APIs obtained from source environment. The logger library may be for example Mlflow, SageMaker, AzureML and thereof.

Referring now at step 306 of the method 300, the one or more hardware processors 204 generates a logging configuration file for the API based on a plurality of logging configurations comprising one or more parameters, one or more metrices, an execution flow and a logger.

Here, an initial logging configuration file (Table 3 and FIG.4) is generated for the API based on a plurality of logging configurations that contains metrics and parameters eligible to get logged from corresponding detected APIs. The logging configuration file is user editable where user can enable or disable what all is required to track. User can also provide choice of the logger library.

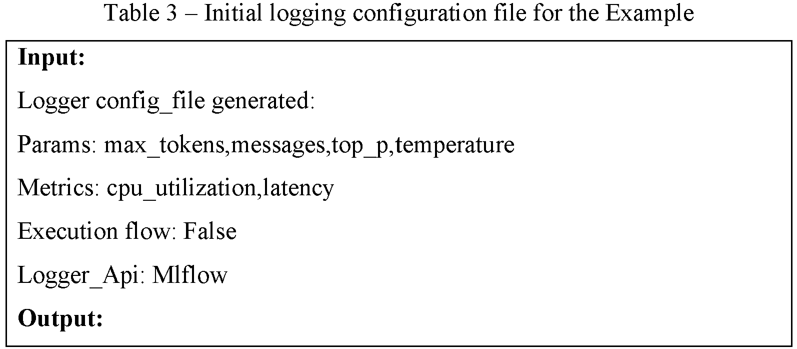

| |
|---|
| Updated Logger config_file details that need to be logged: |
| Params: messages, temperature, completion |
| Logger_Api: Mlflow |

At step 308 of the method 300, the one or more hardware processors 204 obtains the one or more logger APIs from the logger library by mapping the plurality of logging configuration constraints with the API.

From the previous step, the one or more logger APIs are obtained to generate the logging configuration file which logs the API to be used to log corresponding metric, parameter and thereof. Further, one or more APIs from the logger library, its corresponding eligible metrics and the parameters are obtained from the logger configuration file as in Table 4 for the Example.

| Table 4 - Logger API for the Example | |
|---|---|
| **Input:** | |
| Logger config details : | |
| | Params: messages, temperature |
| | Logger_Api: Mlflow |
| **Output:** | |
| Logger API Mapper for params, metrics,etc:= | |
| { 'messages' mlflow.log dict, temperature' :mlflow.log dict} | |

Now, at step 310 of the method 300, the one or more hardware processors 204 retrieves from the software environment an API source code for the API.

Once the API is obtained from the above step, the source retriever unit 210 is utilized to retrieve relevant source code from the AI library for the corresponding API used in the AI application as in Table 5. This source code is available in the software environment as they are distributed open source. This source code is used in next steps to instrument add-on code for logging.

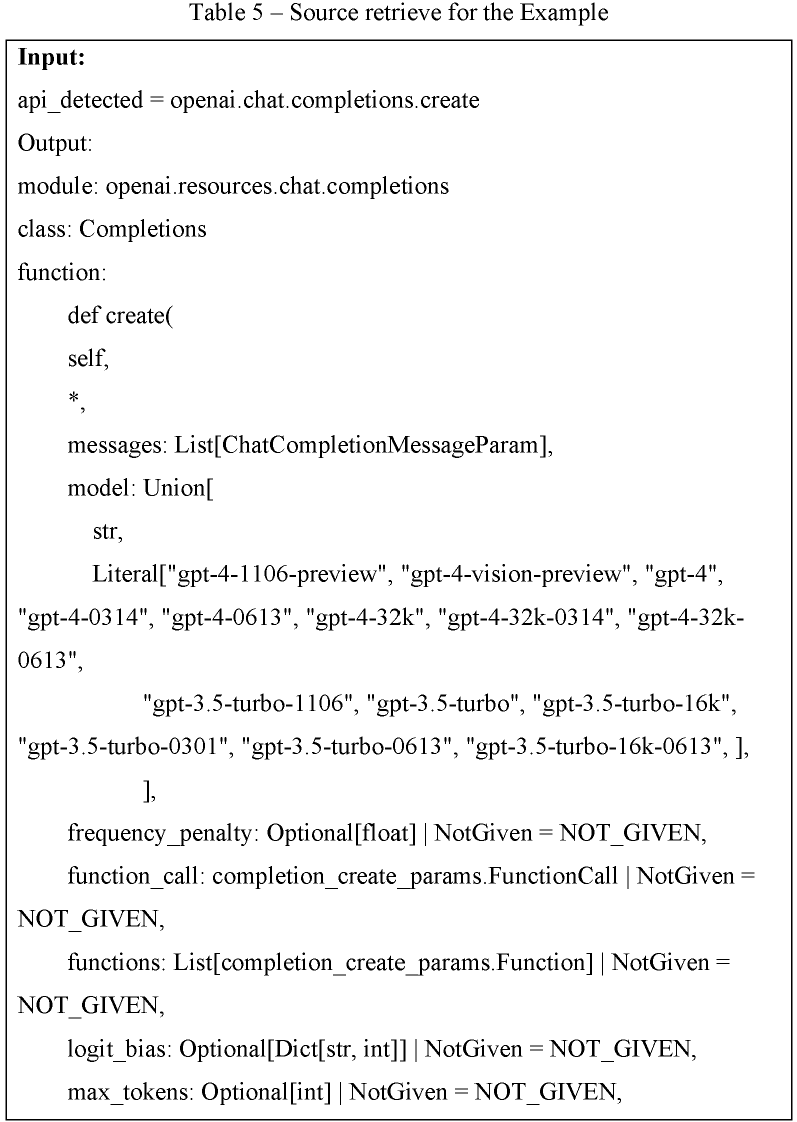

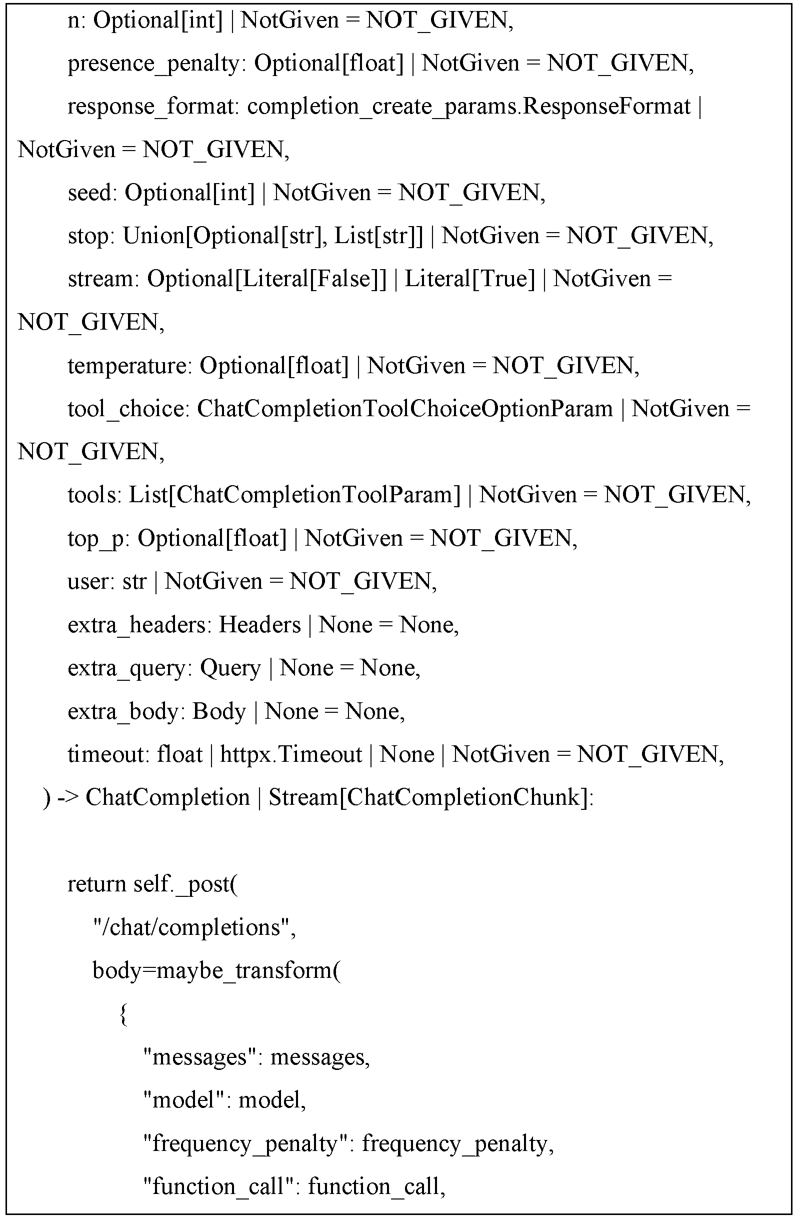

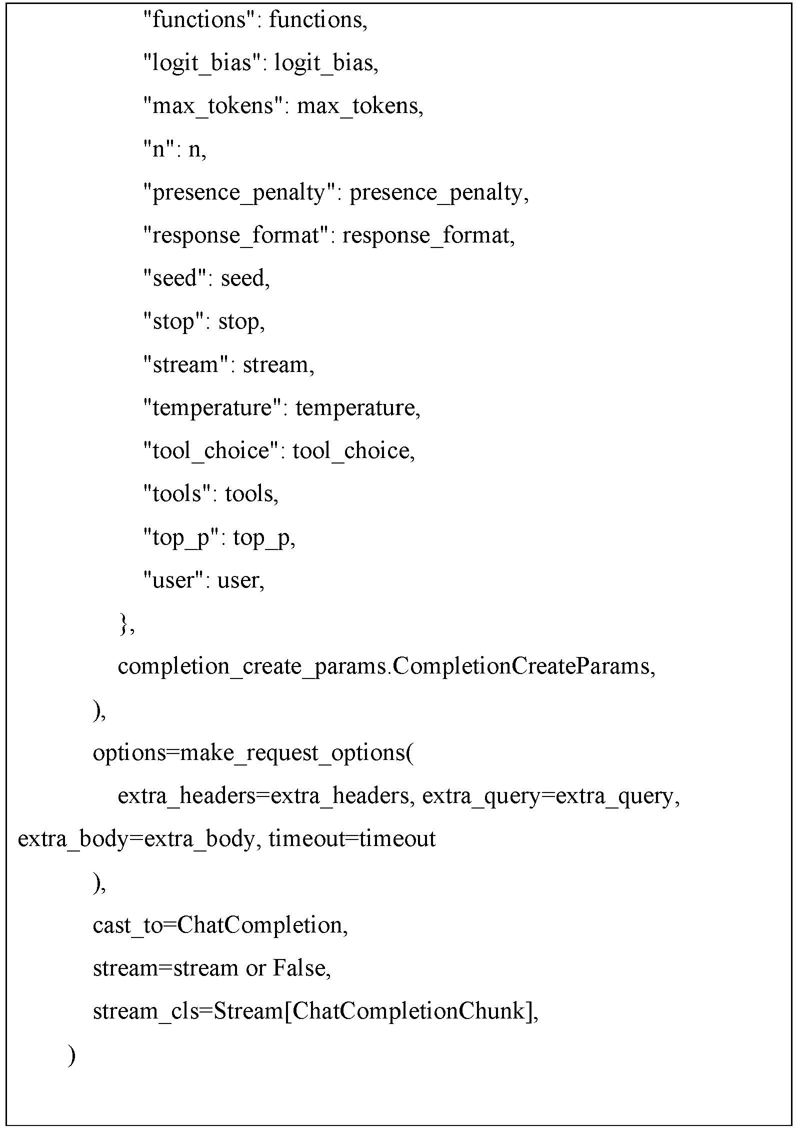

At step 312 of the method 300, the one or more hardware processors 204 constructs using one or more instructors a plurality of instructions for the API source code. The sequential arrangement of the instructor unit 212 includes the model input instructor 212a, the model output instructor 212b, the logger instructor 212c, and the patching instructor 212d. Each instructor generates one or more instructions to infer with corresponding fine-tuned large language models (LLMs).

Further, the method fetches the API source code from the above step to construct the plurality of instructions. Referring now to Table 6, the model input instructor 212a and the model output instructor 212b generates a first set of instructions to map one or more parameters of the API with the plurality of configuration constraints in a logging configuration file. Here, every AI model's or vendor's API may consist of different input and output body (parameters) that may differ with the number of parameters and naming conventions. Further, the model input instructor 212a and the model output instructor 212b instructors all parameters in an input body or output body of an API used in AI application taken from the API source code from the above step as input and object is returned after execution for subsequent instructors. These instructors instruct LLM to map it to parameters requested by user in the logger configuration file.

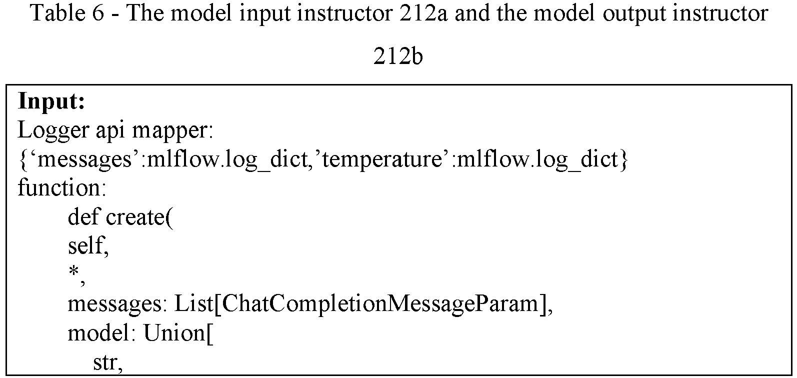

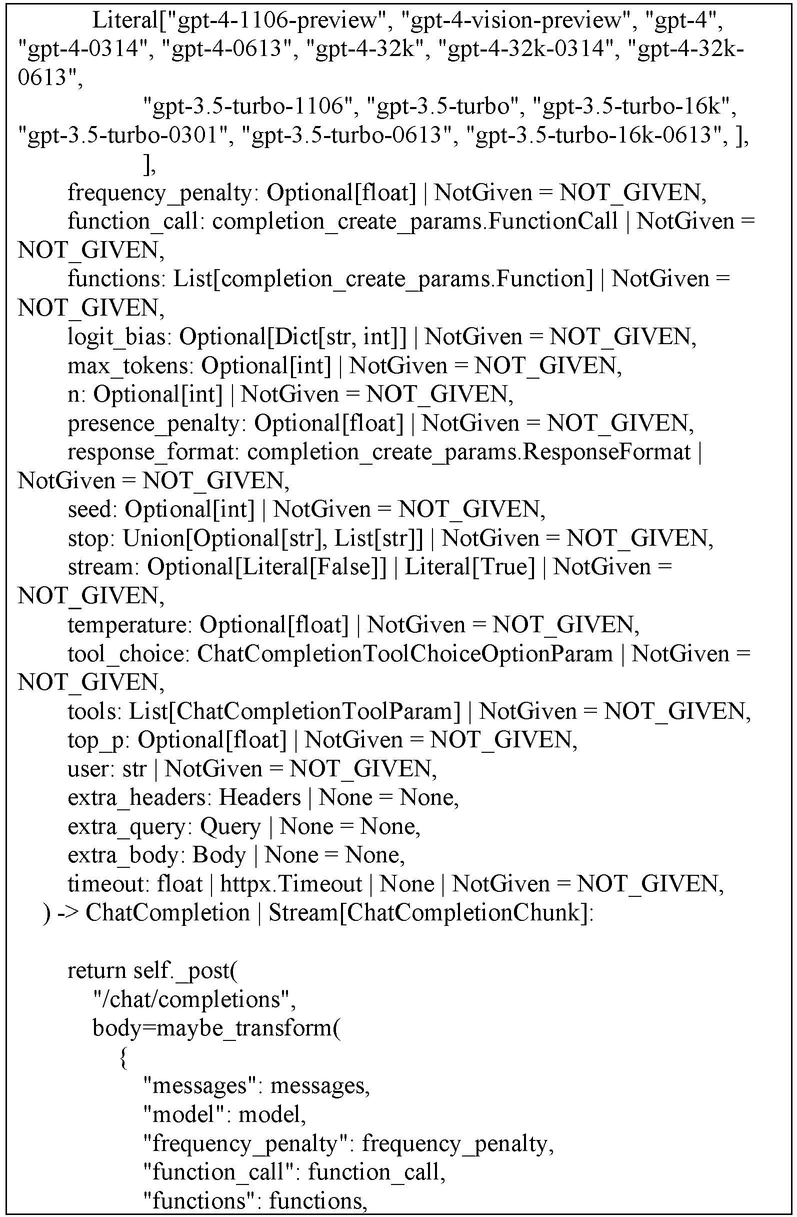

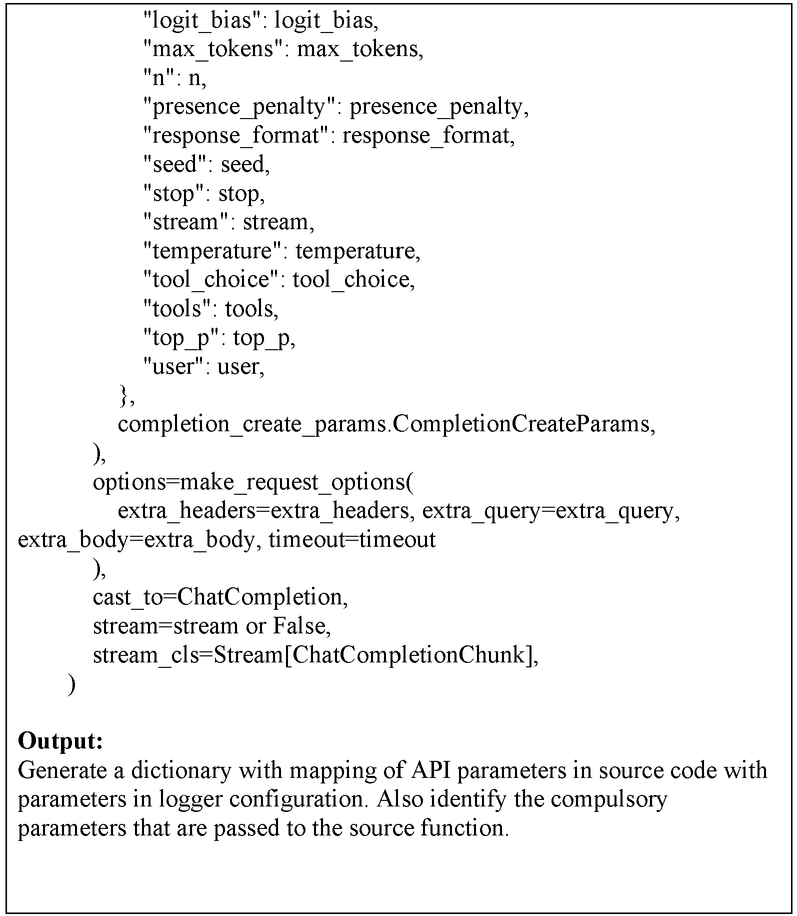

Referring now to Table 7, the logger instructor 212c generates a second set of instructions to log the plurality of configuration constraints in the logging configuration file using at least one logger API.

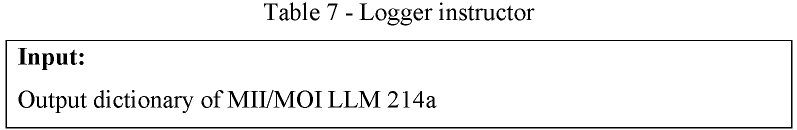

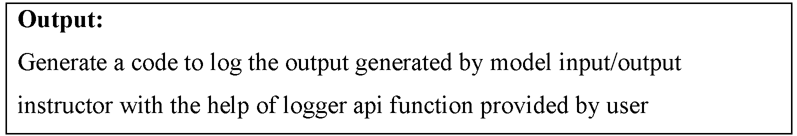

The patching instructor 212d (Table 8) generates a third set of instructions to patch the API source code and instrument at least one logger API to the API source code.

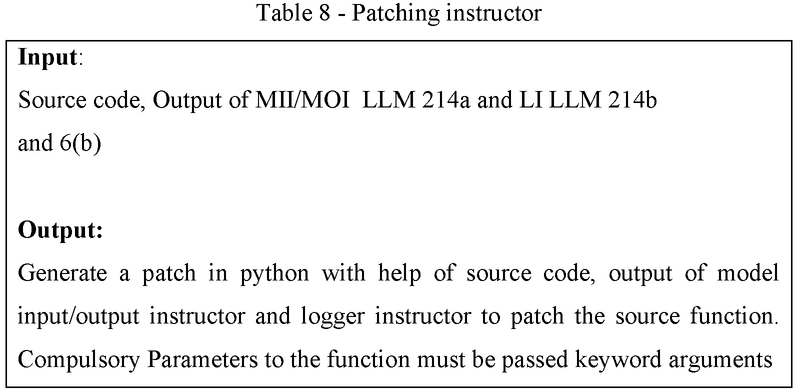

At step 314 of the method 300, the one or more hardware processors 204 generates a logger plug-in using one or more fine-tuned large language models (LLMs) based on the plurality of instructions provided by the one or more instructors.

Referring now Table 9 for the above example, the model input instructor 212a and the model output instructor 212b is inferred the first set of instructions with corresponding fine-tuned LLM to map the one or more parameters of the API with the plurality of logging configuration constraints in the logging configuration file.

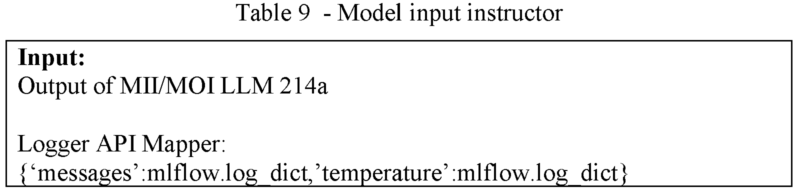

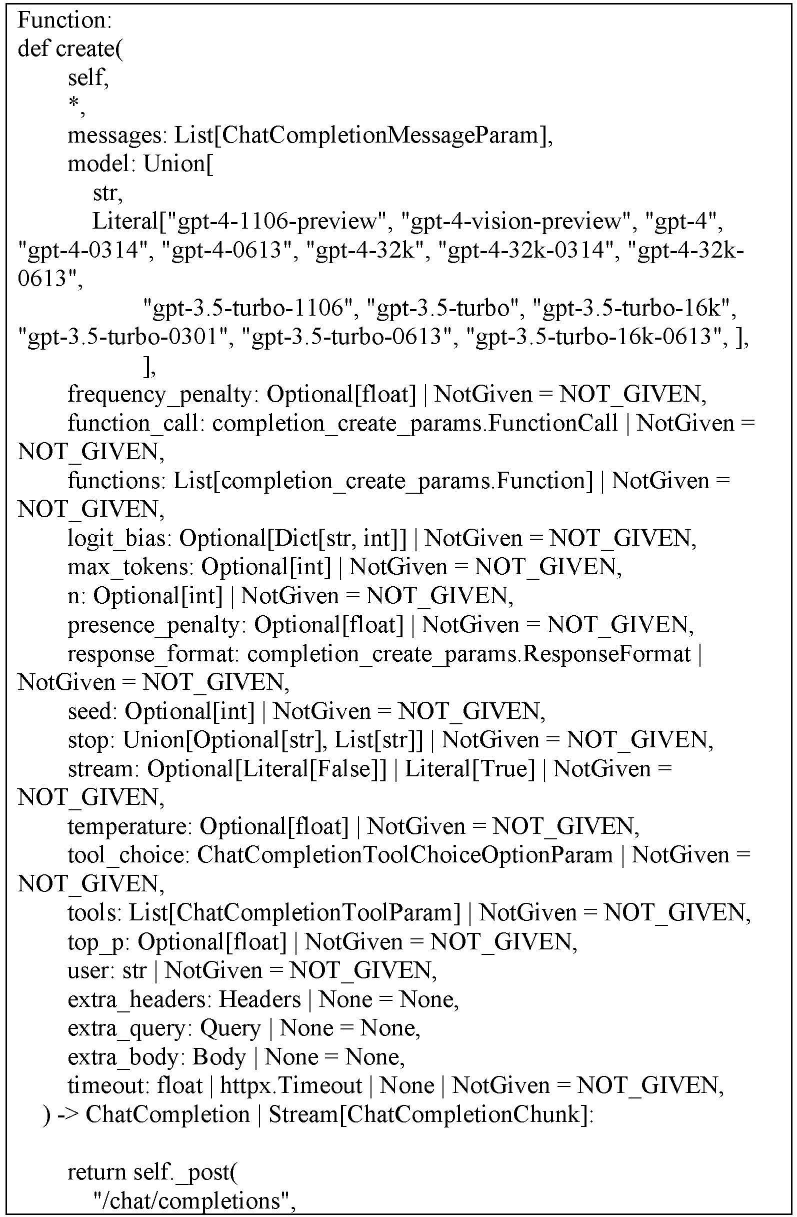

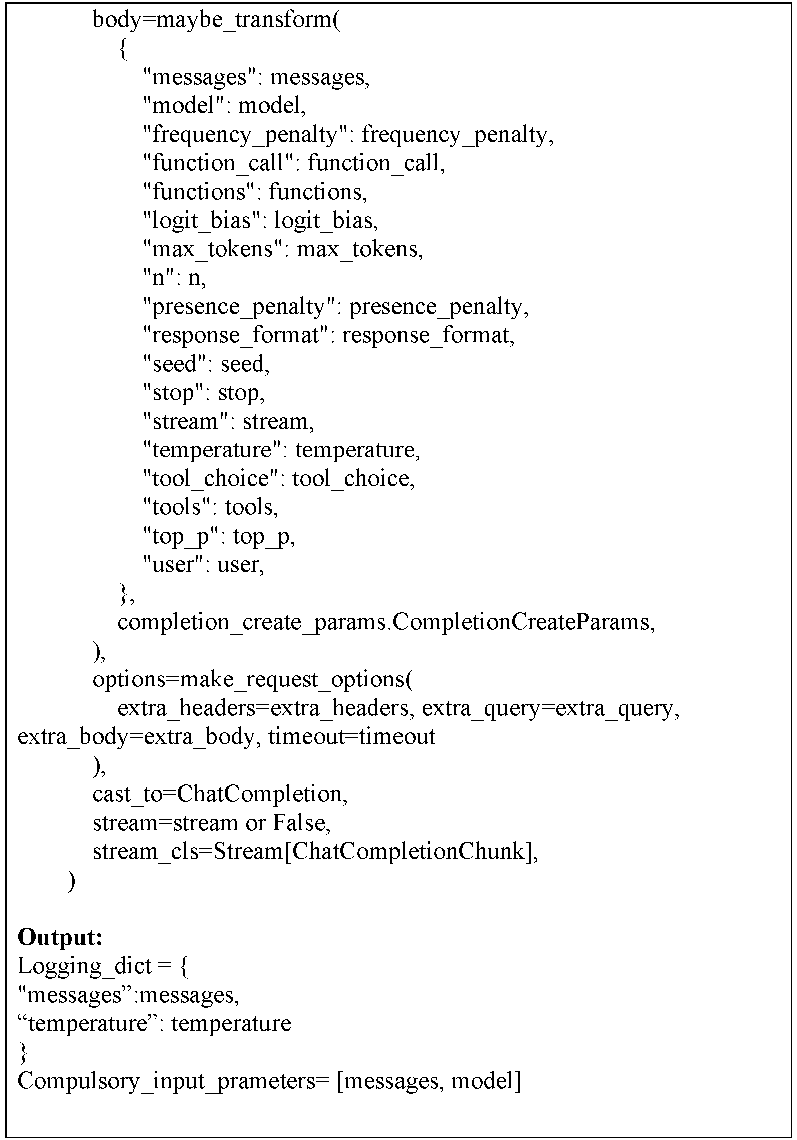

Further, the logger instructor 212b as in Table 10 is inferred with the second set of instructions with corresponding fine-tuned LLM to generate a logging syntax using at least one logger API to log the plurality of logging configuration constraints in the logging configuration file.

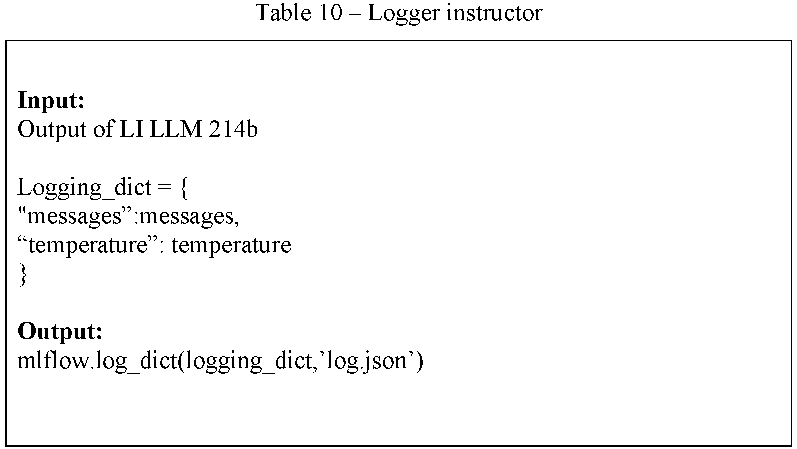

Finally, the patching instructor 212c (referring now to Table 11) is inferred with the third set of instructions with corresponding fine-tuned LLM to generate the logger plug-in by patching the API source code and instrumenting the logging syntax to the API source code.

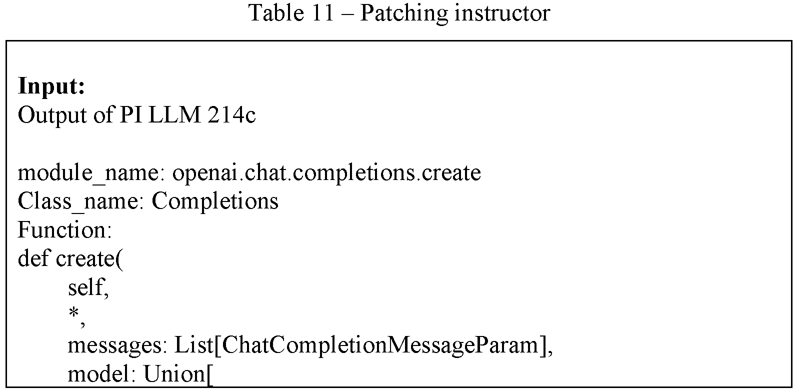

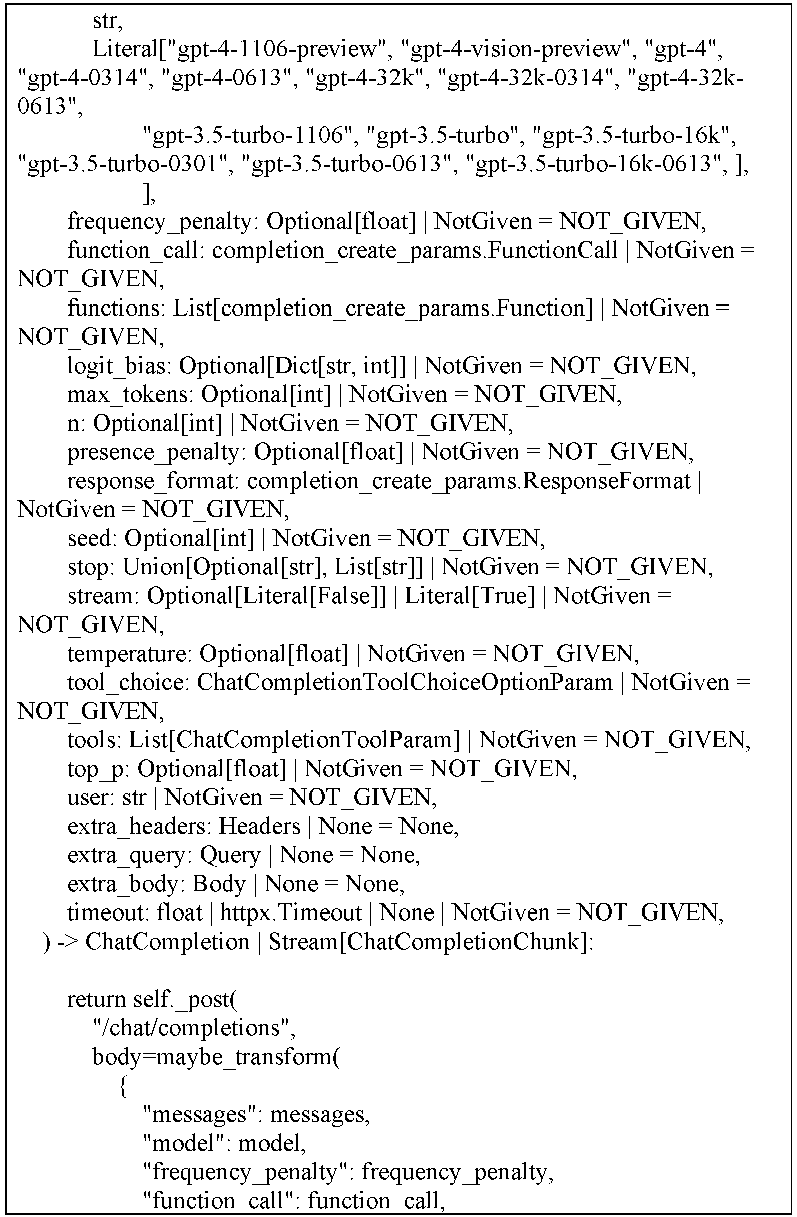

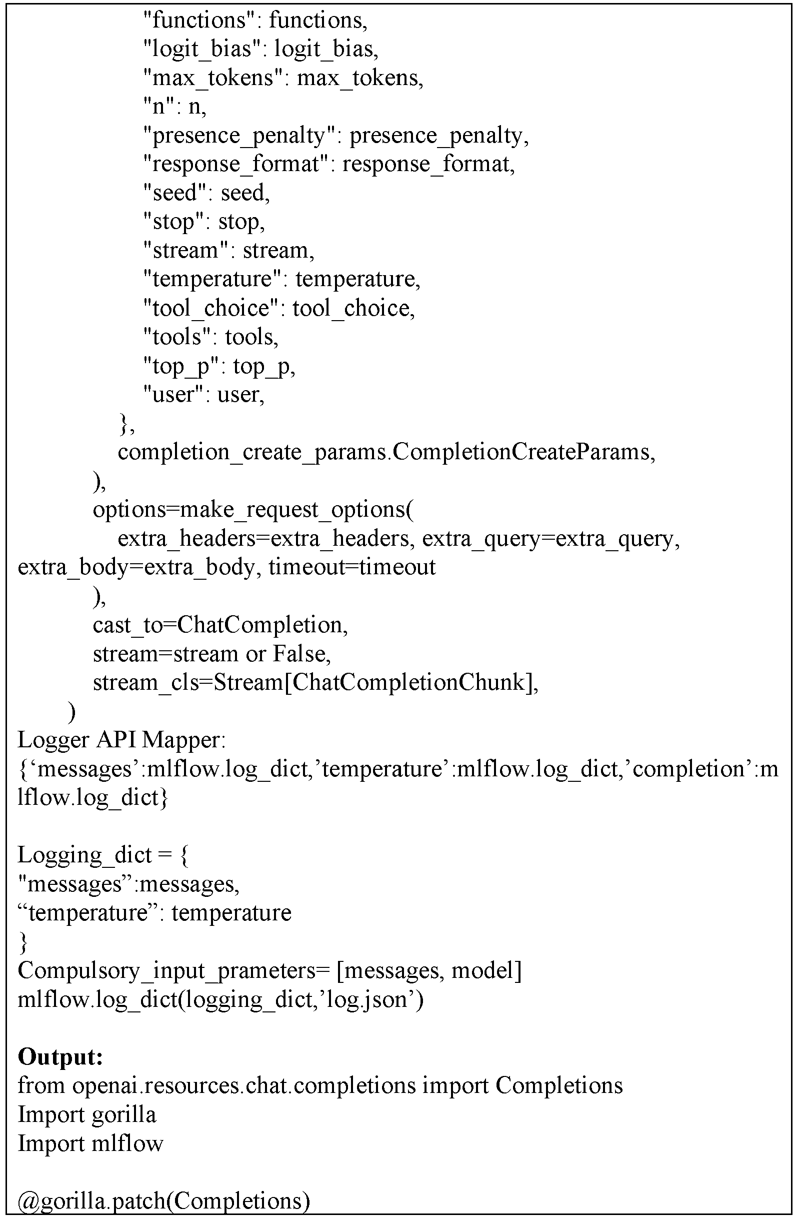

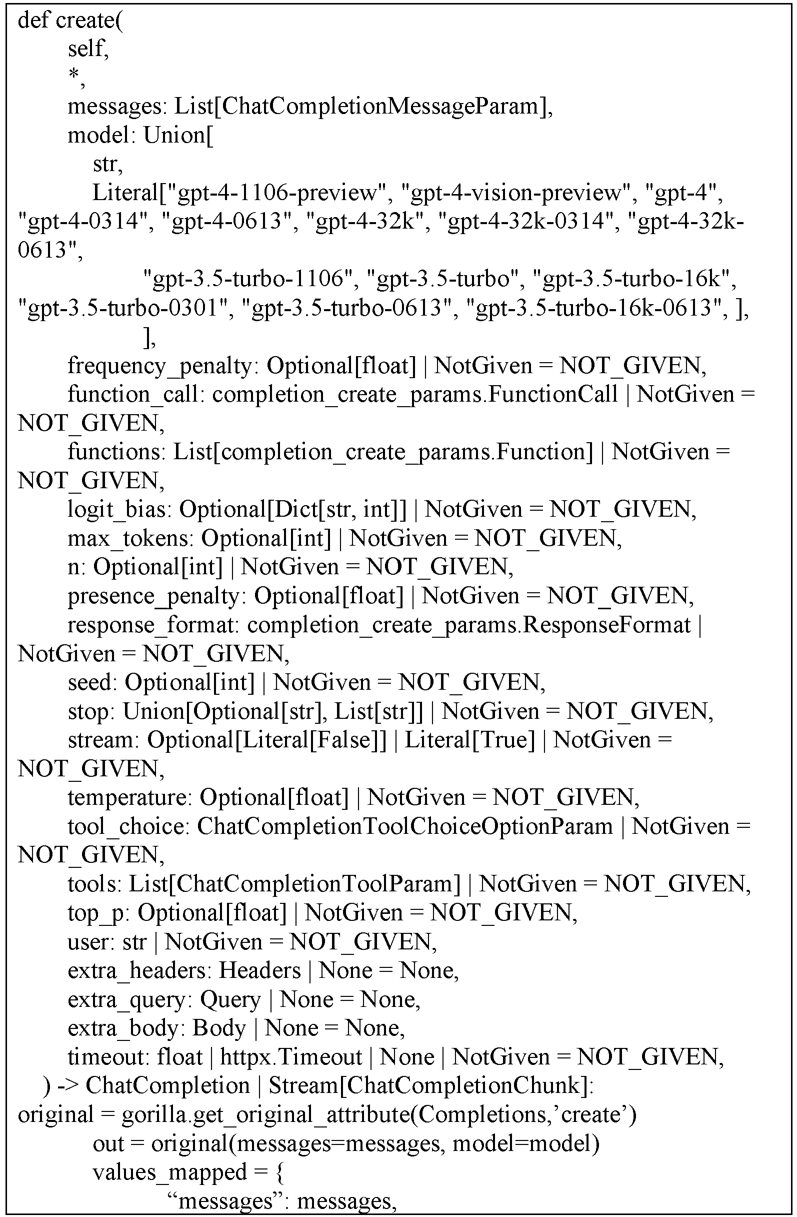

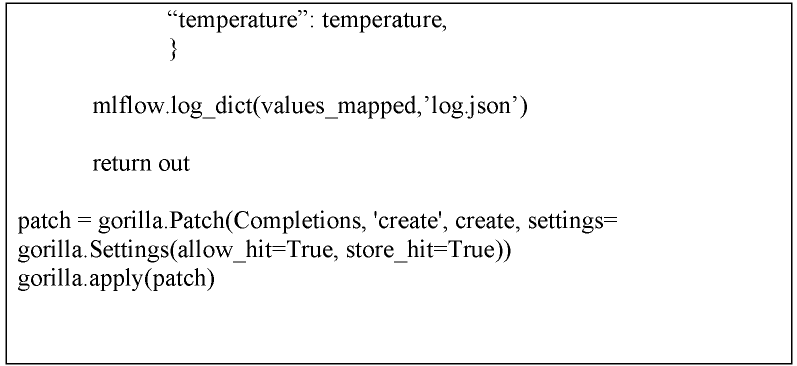

At step 316 of the method 300, the one or more hardware processors 204 validates the logger plug-in via the one or more hardware processors utilizing a configuration validator and a syntax validator for error correctness and providing a feedback to the one or more instructors on occurrence of at least one error.

The generated logger plug-in is validated by the validator unit 216. The configuration validator 216a validates if the generated logger plug-in contains all the plurality of configuration constraints in the logging configuration file that are selected by the user to get logged as in Table 12 for the example as discussed above.

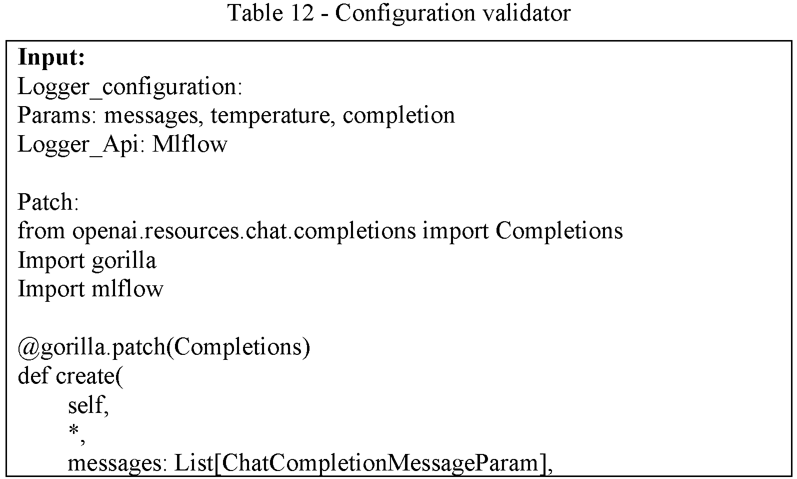

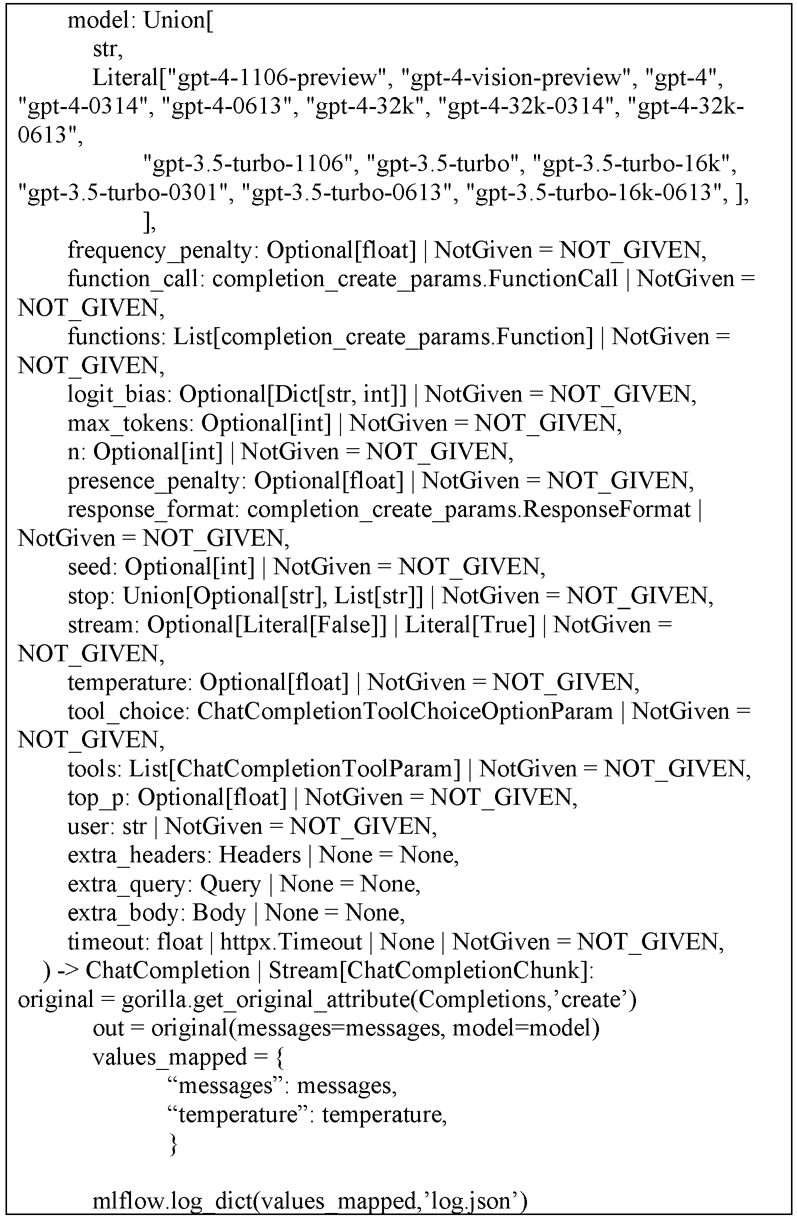

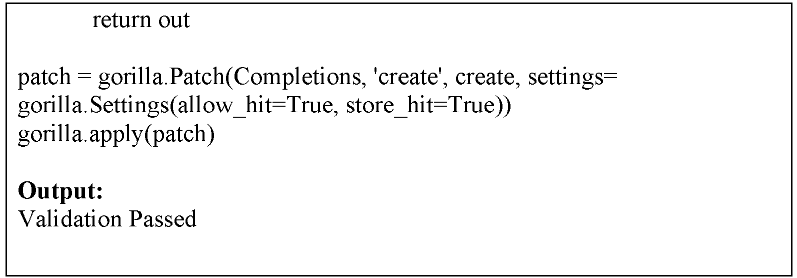

The syntax validator 216b validates if the logger plug-in contains correct syntaxes for the logger API and the API source code patches as in Table 13 for the Example.

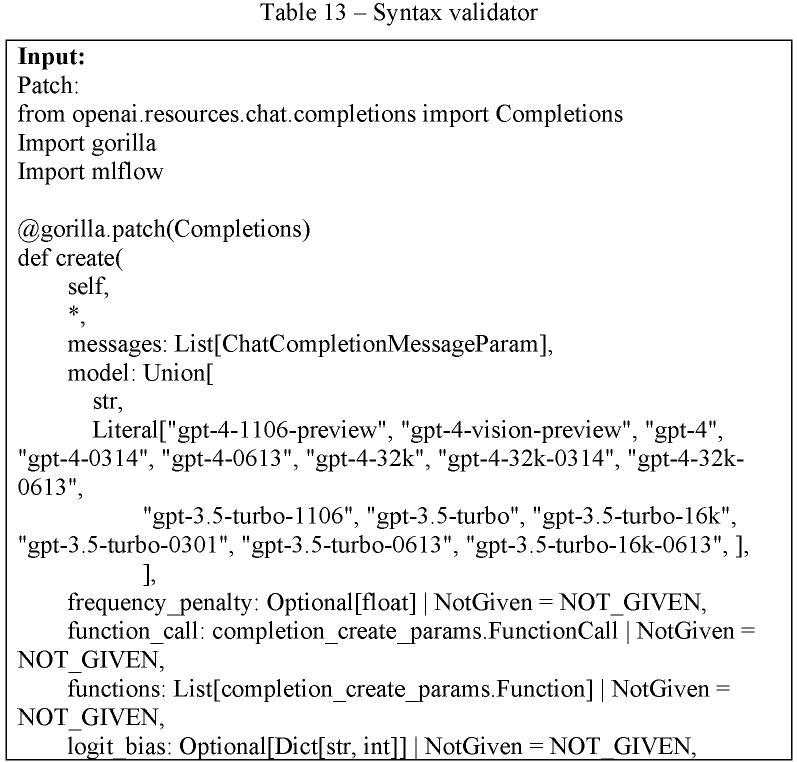

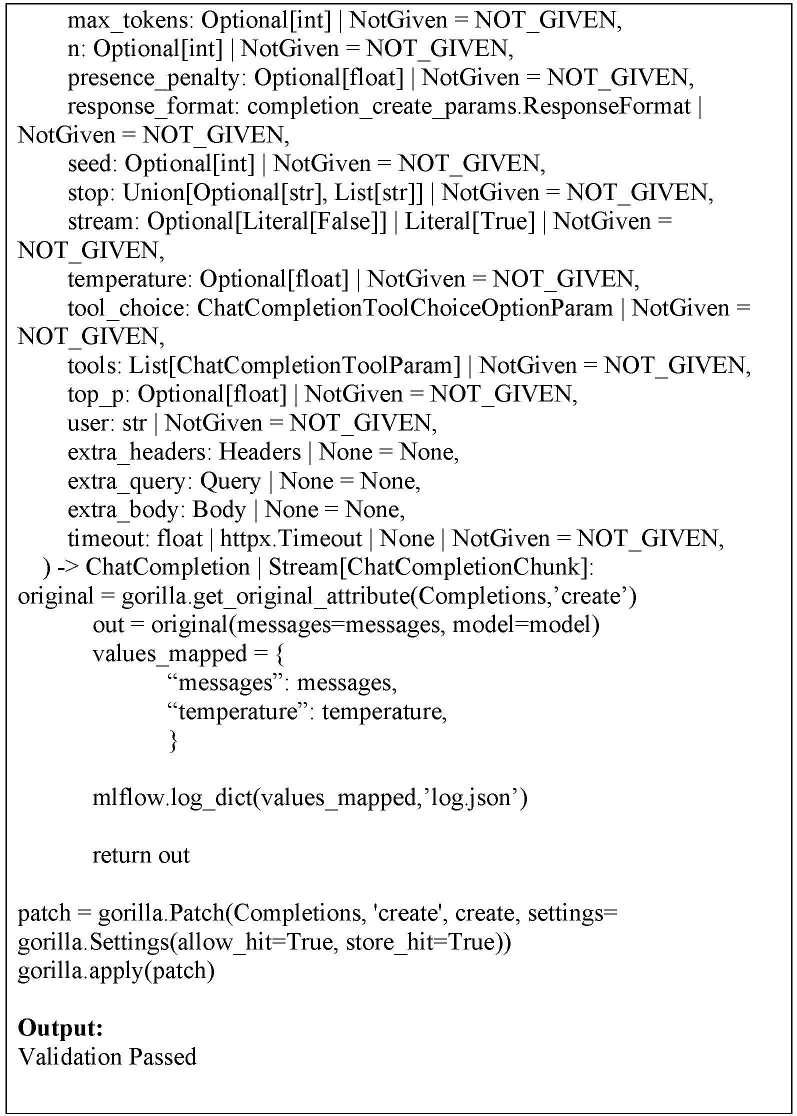

The output of the validator unit 216 is the final logger plug-in that is used along with user application to log metrices, parameters, execution flow to track the performance of the AI application.

In one embodiment, the instructor re-attempts to regenerate an updated logger plug-in when failed to generate correct plug-in for a predefined set of iterations.

The validator unit 216 when detects any issue, it provides feedback to the instructor unit 212 to re-attempt to regenerate an updated logger plug-in when failed to generate correct logger plug-in for a predefined set of iterations.

At step 318 of the method 300, the one or more hardware processors 204 executes the logger plug-in with the enterprise AI application to log and track performance of the enterprise AI application.

Finally, the logger plug-in (Table 14) is executed with the enterprise AI application to select relevant metrices, parameters and execution flow logged that can be used to track the performance of an enterprise AI application.

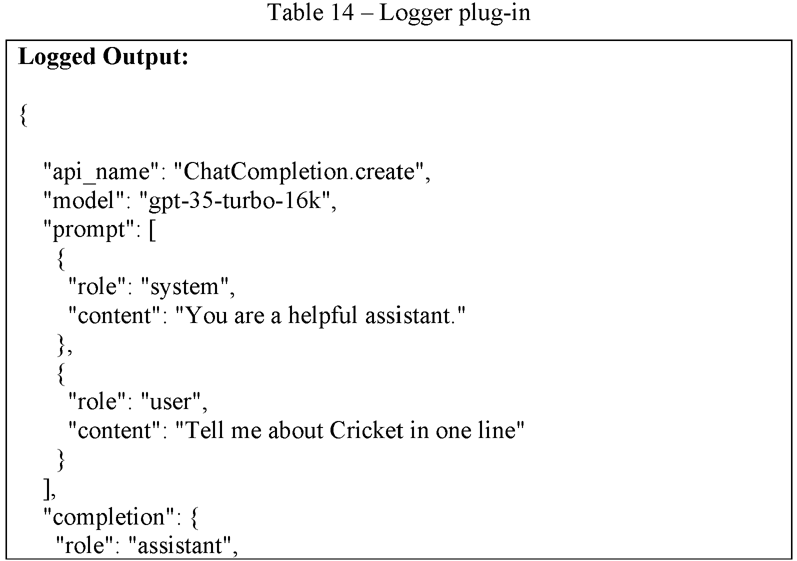

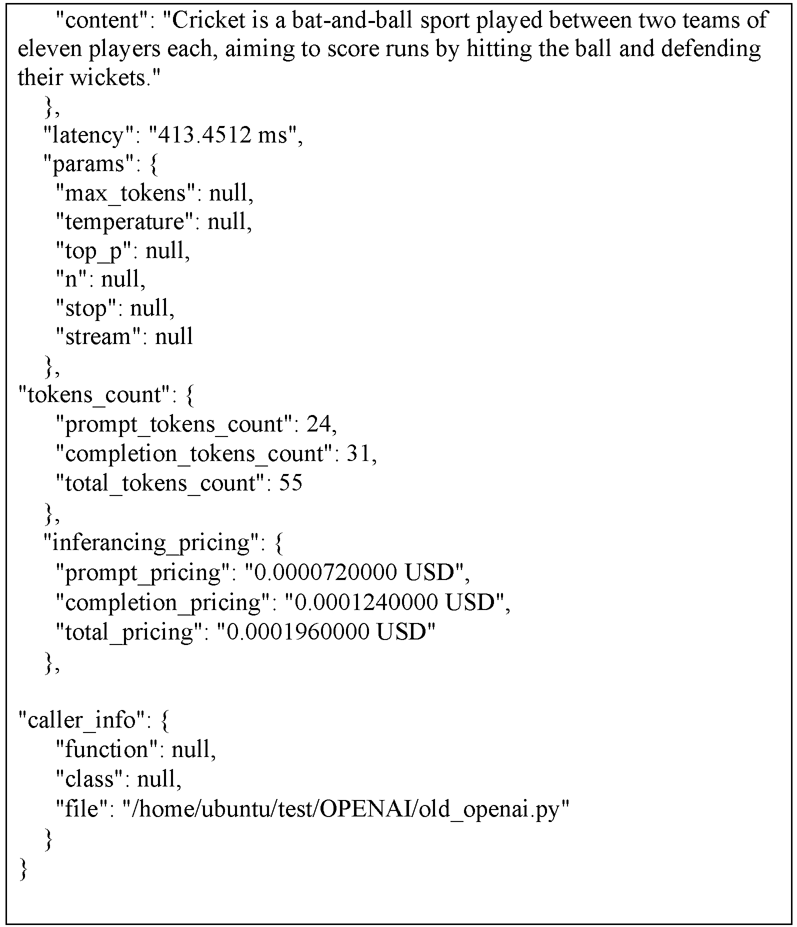

The written description describes the subject matter herein to enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims or if they include equivalent elements with insubstantial differences from the literal language of the claims.

The embodiments of present disclosure herein addresses unresolved problem of tracking performance of AI application. The embodiment, thus provides system and method to track performance of an artificial intelligence (AI) application during development and production lifecycle. In one embodiment, potential Application areas of logging and tracking of AI applications such as,
**Compliance:** Logging of enterprise AI application provides data required for regulatory compliance and audit.

**Security:** Logs of the enterprise application can be tracked to facilitate monitoring for potential breaches. Logs can assist in detecting fraudulent activities by capturing patterns indicative of suspicious behavior.

**Performance analysis:** Tracking of the enterprise AI application can help monitoring performance over time to analyse quality of results, degradation, decay, or anomalies in model behavior.

**Debugging:** Logging allows data scientists and developers to trace the execution of AI algorithms aiding in debugging and troubleshooting in case of issues.

**Resource optimization:** Logs can help organizations to optimize hardware and cloud resource allocation to ensure efficient utilization of computational.

**Predictive maintenance:** Logs of an enterprise AI application can be used to analyze patterns in the logged data to assist identifying potential failures before they occur.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g., any kind of computer like a server or a personal computer, or the like, or any combination thereof. The device may also include means which could be e.g., hardware means like e.g., an application-specific integrated circuit (ASIC), a field-programmable gate array (FPGA), or a combination of hardware and software means, e.g., an ASIC and an FPGA, or at least one microprocessor and at least one memory with software processing components located therein. Thus, the means can include both hardware means and software means. The method embodiments described herein could be implemented in hardware and software. The device may also include software means. Alternatively, the embodiments may be implemented on different hardware devices, e.g., using a plurality of CPUs.

The embodiments herein can comprise hardware and software elements. The embodiments that are implemented in software include but are not limited to, firmware, resident software, microcode, etc. The functions performed by various components described herein may be implemented in other components or combinations of other components. For the purposes of this description, a computer-usable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items, or meant to be limited to only the listed item or items. It must also be noted that as used herein and in the appended claims, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

## Claims

1. A processor-implemented method (300) to track performance of an enterprise AI application, the method comprising:
receiving (302) via one or more hardware processor an enterprise artificial intelligence (AI) application and corresponding software environment;
scanning (304) via the one or more hardware processors the enterprise AI application to identify corresponding application programming interface (API) from an API dictionary comprising at least one of an AI library and a logger library, wherein each AI library includes one or more APIs, and each logger library includes one or more logger APIs;
generating (306) via the one or more hardware processors a logging configuration file for the API based on a plurality of logging configurations comprising one or more parameters, one or more metrices, an execution flow and a logger;
obtaining (308) via the one or more hardware processors the one or more logger APIs from the logger library by mapping the plurality of logging configuration constraints with the API;
retrieving (310) from the software environment via the one or more hardware processors an API source code for the API;
constructing (312) using one or more instructors via the one or more hardware processors a plurality of instructions for the API source code;
generating (314) a logger plug-in using one or more fine-tuned large language models (LLMs) via the one or more hardware processors based on the plurality of instructions provided by the one or more instructors;
validating (316) the logger plug-in via the one or more hardware processors utilizing a configuration validator and a syntax validator for error correctness, and providing a feedback to the one or more instructors on occurrence of at least one error; and
executing (318) via the one or more hardware processors the logger plug-in with the enterprise AI application to log and track performance of the enterprise AI application.

2. The processor-implemented method as claimed in claim 1, wherein an arrangement of the one or more instructors comprises a model input instructor, a model output instructor, a logger instructor, and a patching instructor, wherein each instructor generates one or more instructions to infer with corresponding fine-tuned large language models (LLMs).

3. The processor-implemented method as claimed in claim 2, wherein the model input instructor and the model output instructor generates a first set of instructions to map one or more parameters of the API with the plurality of configuration constraints in a logging configuration file.

4. The processor-implemented method as claimed in claim 2, wherein the logger instructor generates a second set of instructions to log the plurality of configuration constraints in the logging configuration file using at least one logger API.

5. The processor-implemented method as claimed in claim 2, wherein the patching instructor generates a third set of instructions to patch the API source code and instrumenting at least one logger API to the API source code.

6. The processor-implemented method as claimed in claim 1, wherein the logger plug-in for the API using the plurality of instructions is generated by performing the steps of:
inferring the first set of instructions received from the model input instructor and the model output instructor with corresponding fine-tuned LLM to map the one or more parameters of the API with the plurality of logging configuration constraints in the logging configuration file;
inferring the second set of instructions received from the logger instructor with corresponding fine-tuned LLM to generate a logging syntax using at least one logger API to log the plurality of logging configuration constraints in the logging configuration file; and
inferring the third set of instructions received from the patching instructor with corresponding fine-tuned LLM to generate the logger plug-in by patching the API source code and instrumenting the logging syntax to the API source code.

7. The processor-implemented method as claimed in claim 1, wherein the configuration validator validates if the logger plug-in contains all the plurality of configuration constraints in the logging configuration file that are selected by a user to get logged, wherein the syntax validator validates if the logger plug-in contains correct syntaxes for the logger API and the API source code patches.

8. The processor-implemented method as claimed in claim 1, wherein the one or more instructors re-attempts to regenerate an updated logger plug-in when failed to generate correct logger plug-in for a predefined set of iterations.

9. A system (100) to track performance of an enterprise AI application, comprising:
a memory (102) storing instructions;
one or more communication interfaces (106); and
one or more hardware processors (104) coupled to the memory (102) via the one or more communication interfaces (106), wherein the one or more hardware processors (104) are configured by the instructions to:
receive an enterprise artificial intelligence (AI) application and corresponding software environment;
scan the enterprise AI application to identify corresponding application programming interface (API) from an API dictionary comprising at least one of an AI library and a logger library, wherein each AI library includes one or more APIs, and each logger library includes one or more logger APIs;
generate a logging configuration file for the API based on a plurality of logging configurations comprising one or more parameters, one or more metrices, an execution flow and a logger;
obtain the one or more logger APIs from the logger library by mapping the plurality of logging configuration constraints with the API;
retrieve from the software environment an API source code for the API;
construct using one or more instructors a plurality of instructions for the API source code;
generate a logger plug-in using one or more fine-tuned large language models (LLMs) based on the plurality of instructions provided by the one or more instructors;
validate the logger plug-in utilizing a configuration validator and a syntax validator for error correctness, and providing a feedback to the one or more instructors on occurrence of at least one error; and
execute the logger plug-in with the enterprise AI application to log and track performance of the enterprise AI application.

10. The system as claimed in claim 9, wherein an arrangement of the one or more instructors comprises a model input instructor, a model output instructor, a logger instructor, and a patching instructor, wherein each instructor generates one or more instructions to infer with corresponding fine-tuned large language models (LLMs).

11. The system as claimed in claim 10, wherein the model input instructor and the model output instructor generate a first set of instructions to map one or more parameters of the API with the plurality of configuration constraints in a logging configuration file, wherein the logger instructor generates a second set of instructions to log the plurality of configuration constraints in the logging configuration file using at least one logger API, wherein the patching instructor generates a third set of instructions to patch the API source code and instrumenting at least one logger API to the API source code.

12. The system as claimed in claim 9, wherein the logger plug-in for the API using the plurality of instructions is generated by performing the steps of:
inferring the first set of instructions received from the model input instructor and the model output instructor with corresponding fine-tuned LLM to map the one or more parameters of the API with the plurality of logging configuration constraints in the logging configuration file;
inferring the second set of instructions received from the logger instructor with corresponding fine-tuned LLM to generate a logging syntax using at least one logger API to log the plurality of logging configuration constraints in the logging configuration file; and
inferring the third set of instructions received from the patching instructor with corresponding fine-tuned LLM to generate the logger plug-in by patching the API source code and instrumenting the logging syntax to the API source code.

13. The system as claimed in claim 9, wherein the configuration validator validates if the logger plug-in contains all the plurality of configuration constraints in the logging configuration file that are selected by a user to get logged.

14. The system as claimed in claim 9, wherein the syntax validator validates if the logger plug-in contains correct syntaxes for the logger API and the API source code patches, wherein the one or more instructors re-attempts to regenerate an updated logger plug-in when failed to generate correct logger plug-in for a predefined set of iterations.

15. One or more non-transitory machine-readable information storage mediums comprising one or more instructions which when executed by one or more hardware processors cause:
receiving via one or more hardware processor an enterprise artificial intelligence (AI) application and corresponding software environment;
scanning via the one or more hardware processors the enterprise AI application to identify corresponding application programming interface (API) from an API dictionary comprising at least one of an AI library and a logger library, wherein each AI library includes one or more APIs, and each logger library includes one or more logger APIs;
generating via the one or more hardware processors a logging configuration file for the API based on a plurality of logging configurations comprising one or more parameters, one or more metrices, an execution flow and a logger;
obtaining via the one or more hardware processors the one or more logger APIs from the logger library by mapping the plurality of logging configuration constraints with the API;
retrieving from the software environment via the one or more hardware processors an API source code for the API;
constructing using one or more instructors via the one or more hardware processors a plurality of instructions for the API source code;
generating a logger plug-in using one or more fine-tuned large language models (LLMs) via the one or more hardware processors based on the plurality of instructions provided by the one or more instructors;
validating the logger plug-in via the one or more hardware processors utilizing a configuration validator and a syntax validator for error correctness, and providing a feedback to the one or more instructors on occurrence of at least one error; and
executing via the one or more hardware processors the logger plug-in with the enterprise AI application to log and track performance of the enterprise AI application.
